# EUROPEAN PATENT SPECIFICATION

(11) **EP 2 939 530 B1**
(45) Date of publication and mention of the grant of the patent: **05.05.2021**
(21) Application number: 15397515.6
(22) Date of filing: 20.04.2015
(51) Int. Cl.: A01G 23/00

(54) **A METHOD AND A SYSTEM FOR CONTROLING THE CRANE OF A FORWARDER**
VERFAHREN UND SYSTEM ZUR STEUERUNG DES KRANS EINER FORSTMASCHINE
PROCÉDÉ ET SYSTÈME PERMETTANT DE COMMANDER LA GRUE D'UNE MACHINE FORESTIÈRE

(30) Priority: 29.04.2014 FI 20145397
(43) Date of publication of application: 04.11.2015
(73) Proprietor: John Deere Forestry Oy, 33100 Tampere (FI)
(72) Inventor: Kananoja, Teemu, 33480 Ylöjärvi (FI)
(74) Representative: Berggren Oy

(56) References cited:
- EP-A1- 2 674 828
- WO-A1-2010/146237
- WO-A1-2013/137801

## Description

### Field of the invention

The invention relates to a method and a system for controlling the crane of a forwarder.

### Background of the invention

When working with a forwarder, a common task to be performed with the crane is to transfer a tree trunk from the outside of the load space to the inside of the load space, as well as to move the empty loading grapple from the load space (after lowering the trunk to the load space) back to a place outside the load space where trunks to be loaded have been collected after felling, delimbing and cross-cutting of the trunks by a harvester. Another common task is to unload trunks from the load space to a stack placed outside the load space, and then to move the empty grapple from the outside of the load space back to the inside of the load space for loading another trunk. In both cases, the empty grapple is moved inside the load space and from the inside of the load space to the outside of the load space, between successive bunks in the longitudinal direction of the load space, if possible, because this operation can then be performed faster than by lifting the grapple above the bunks. This is essentially influenced by the fact that the grapple can then be moved from the outside to the inside of the load space, or *vice versa,* solely or almost solely by rotating the crane by means of a rotary table placed at its mounting point. However, if the grapple is used for moving a trunk from the outside of the forwarder to the load space or from the load space to the outside of the forwarder, the grapple will always have to be lifted over the bunks.

Operations which are repeated a number of times during the same work performance are often almost identical with each other; in other words, certain control functions are repeated which the driver of the forwarder actuates by the different controllers always in a very similar way. In spite of this, the implementation of the control function routines required for the operation will always require that the driver of the machine is careful and attentive. For example, in the vicinity of the travel paths, there may be obstacles which have to be taken into account when performing the movements so that the travel path of the crane does not, when performing such a routine operation, accidentally deviate from the intended travel path, in which case a part of the crane, the grapple mounted on the crane head, or the trunk in the grapple could hit an obstacle in the vicinity of the travel path, such as the screen in the front part of the load space or any of the bunks on either side of the load space of the forwarder. Moreover, it has to be possible to stop the motion of the crane easily and quickly in the middle of the operation, because the ambient conditions may change when working in a forest, whereby an obstacle is moved to a travel path that was previously suitable (for example, because the forest machine has moved to a new felling site where a tree, a branch, or the like is located on a travel path that was used previously). As a result, it has not been possible to automate the movements of the crane in the same way as, for example, the movements of an industrial robot, but it has been considered best that when manipulating the crane of the forest machine, the driver of the forest machine should be in control all the time, selecting the paths according to the conditions, as he/she deems appropriate. Such a forest machine which has a loading arrangement configured to load logs to a load carrier and which is automated to work such as an industrial robot has been described in an European patent application publication no. EP 2 674 828 A1.

When the grapple mounted on the crane head of the forwarder is moved inside the load space, between the bunks, from the inside to the outside of the load space, or *vice versa,* being empty, or over the bunks when loaded with trunks in the grapple, it is difficult for the driver in the cabin of the forwarder to see at which point the grapple is exactly located in the longitudinal direction of the load space. Thus, if the distance is estimated incorrectly, there is a risk that the grapple and/or the trunk therein might collide with the screen limiting the front part of the load space, or with one of the bunks which limit the load space and between which the grapple was intended to be transferred, particularly when the transfer is performed in the above described way by merely rotating the whole crane by means of the slewing table at its mounting point. Normally, the empty grapple is transferred from the inside to the outside of the load space, or *vice versa,* between the two middlemost bunks in the longitudinal direction of the load space, because the grapple will then be ready at the location that is the most advantageous for the loading of trunks. In some situations, however, it may be faster and/or easier to move the empty grapple from the outside to the inside of the load space, or *vice versa,* between some other bunks than the two middlemost bunks. For example when moving the grapple in the front part of the load space, one should make sure that the grapple does not hit the screen. When there is a trunk in the grapple, the grapple is always transferred over the bunks into the load space. Even in such a case, it is important to bring the grapple to the center of the load space in the longitudinal direction, because this will enable faster loading and e.g. ensure that an end of the trunk will not hit the screen when the trunk is lowered into the load space.

A known method for controlling a loading arrangement (i.e. a crane with grabble) of a forest harvester automatically is described in the international patent application publication WO 2013/137801 A1. In that method the loading arrangement is arranged to receive logs from a harvester unit, transfer them in and above the load compartment of the said forest harvester, and to release them to load the logs in to the said load compartment.

### Brief summary of the invention

It is an aim of the invention to present a novel method for controlling the crane of a forwarder, wherein a grapple or another implement mounted on the crane head can be moved inside the load space of the forwarder, as well as from the inside to the outside of the load space, and/or from the outside to the inside of the load space more easily and securely than before so that the grapple mounted on the crane head, or a trunk therein, will not hit either of the two successive bunks or, for example, the screen limiting the load space. Moreover, it is an aim of the invention to present a system for implementing the method according to the invention.

The aim of the invention is achieved by the method according to the invention, because the grapple being inside the load space, and/or the grapple being transferred from the inside to the outside of the load space, or *vice versa,* the grapple is transferred by moving the crane automatically in the radial direction of the crane to a given target position stored in the memory of the control system, whereby the driver of the forwarder will know exactly the location of the grapple in the load space when it is in the target position. Thus, the grapple is always in a location from which it can be steered to the next location by using the same well-defined movements without colliding with the screen in the front part of the load space or with the bunks limiting the load space. To put it more precisely, the method according to the invention is characterized in what will be presented in claim 1, and the system according to the invention is characterized in what will be presented in claim 11. Dependent claims 2 to 10 will present some advantageous embodiments of the method according to the invention, and dependent claim 12 will present an advantageous embodiment of the system according to the invention.

The method and the system according to the invention have the advantage that the grapple mounted on the crane head can be moved in the load space and/or transferred from the inside to the outside of the load space, or *vice versa,* faster, more easily and more straightforwardly than before. In other words, the method according to the invention facilitates the steering of the crane and reduces the effort and stress of the driver of the forest machine doing the work. As another advantage, such a method facilitating the manipulation of the crane is still simpler, more secure and easier to implement under demanding logging conditions than *e.g.* a method in which the movements for performing the operation would be fully automated (as in the case of an industrial robot).

It should be noted that the terms used in the present application text for describing the control of the crane and the other functions of the forest machine refer to the following:
- a function is an action set off by one or more actuators or other electronic, mechanical or hydraulic devices of the forest machine, or by a combination of these. Thus, functions include, for example, functions set off by different actuators of the forest machine, such as the movement of one or more booms of the crane, the turning of the delimbing blades against a tree trunk, the sawing movement of the saw, or the feeding movement of the feeding rollers, or a routine consisting of several single movements for performing a task. However, functions also include any other actions controlled by the controllers in the forest machine, such as the updating of a display in the cabin, a change in the rotational speed of the engine, or the headlights coming on and off.
- a controller is a device for controlling a function, for example a control lever, a key in a keyboard, a rocker lever, a switch, a switch button, or a key displayed graphically on a touch display, *etc.*
- a control function refers to the changing of the state of a controller to a control position or another state that will induce the control of a function; that is, for example, the turning of a control lever forward, backward, to the left or to the right, the pressing of a key in a keyboard, the turning of a rocker lever in either direction, or the touching of an icon on a touch display. Thus, one controller can be applied to set off one or more control functions.
- being controlled refers to starting, stopping, or being adjusted, or another change in the state of a function.
- an operation refers to a routine consisting of one or more functions and comprising a step relating to work with the forest machine. For example, in loading of trunks into the load space of a forwarder, one operation consists of the transfer of a trunk from a stack into the load space of the forwarder, another operation consists of the placement of the trunk into the load space, a third operation consists of the transfer of the grapple back to the stack, *etc.*
- a forwarder refers to a forest machine having a load space for tree trunks and a crane and a grapple suitable for loading the trunks.
- the radial direction of the crane refers to the direction parallel to the horizontal plane from the swivelling point of the crane (*i.e.* the point of rotation of the turning table) towards the straight line transverse to this horizontal plane and passing through the crane head.

### Description of the drawings

In the following, the invention will be described in more detail with reference to the appended drawings, in which
- Fig. 1: shows an operation to be implemented with the crane of a forest machine, controlled according to the method of the invention,
- Fig. 2: shows a principle view of the couplings between the crane of the forwarder shown in Fig. 1, a control unit in the forwarder, as well as the controllers applied for controlling the crane; and
- Fig. 3: shows a principle view illustrating the movement of the grapple to a predetermined target position when the grapple is in the load space, as well as the transfer of the grapple between two successive bunks from the outside to the inside of the load space, and *vice versa.*

### Detailed description of the invention

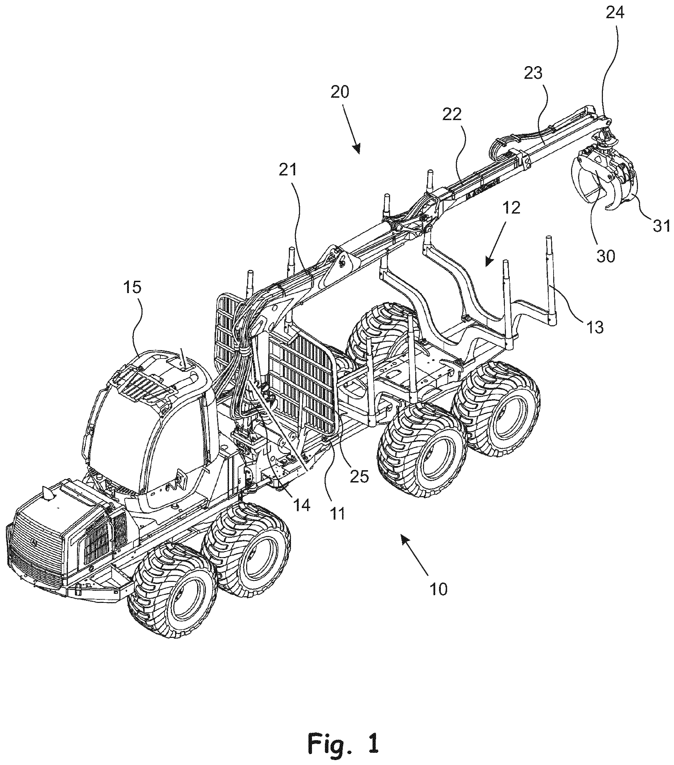

The method according to the invention can be applied in various forwarders, *i.e.* in any forest machines by which previously felled, delimbed trunks, cut to logs with a fixed length, are transferred away from the felling site. The forwarder 10 shown in Fig. 1 is a forwarder whose mechanical structure is known as such, having a load space 12 formed for transporting tree trunks in the space between bunks 13 in the rear part of the frame 11, the front part being equipped with a driving and hauling apparatus, a cabin 15, and a crane 20 therebetween, formed of a hoisting boom 21, a knuckle boom 22 and an extension boom 23. The crane 20 is mounted on the frame 11 of the forwarder by means of a slewing table 14 placed between the cabin 15 and the load space 12 so that it can be rotated around a vertical axis, *i.e.* a rotation axis X_{c}, with respect to the frame 11 from one side of the forwarder to another. The hoisting boom 21 is mounted by a joint on the slewing table 14, the knuckle boom 22 is mounted by a joint at the end of the hoisting boom 21, and the extension boom 23 is fitted at the end of the knuckle boom, to be movable in its longitudinal direction so that it can move from the end of the knuckle boom to the inside of the knuckle boom 22 and protrude from it. Actuators 101 to 104 functioning in a way known as such, for example hydraulically, are provided between the hoisting boom 21 and the slewing table 14, between the hoisting boom 21 and the knuckle boom 22, and between the knuckle boom 22 and the extension boom 23, for turning the hoisting boom 21 with respect to the slewing table 14, the knuckle boom 22 with respect to the hoisting boom 21, and for moving the extension boom 23 in and out of the knuckle boom 22.

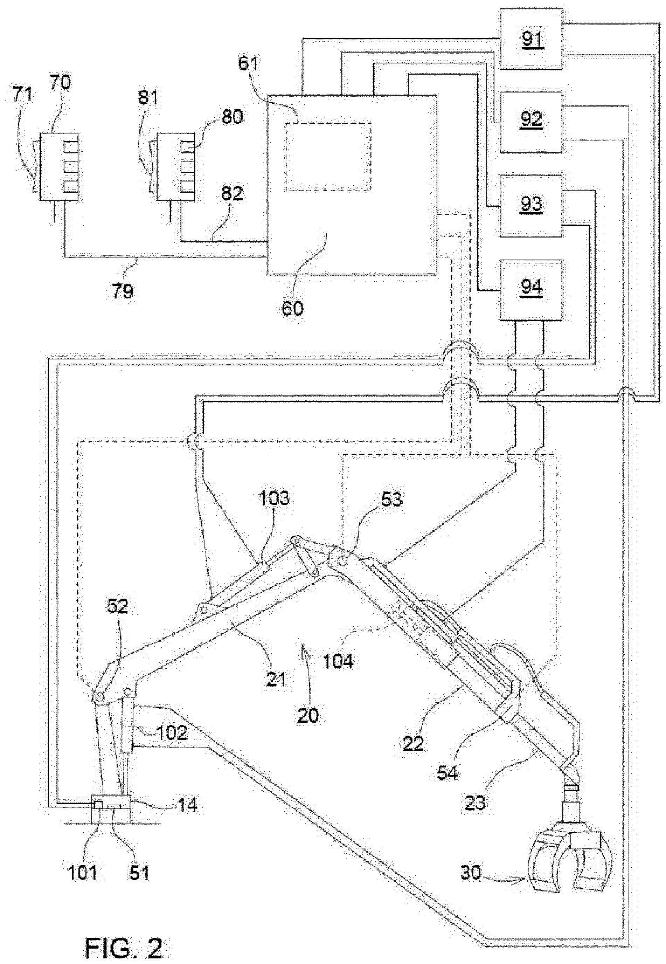

Controlling the forwarder 10 and the crane 20 is configured to be carried out from the cabin 15 placed in the front part of the frame 11. For this, the cabin 15 is equipped with various controllers known as such, for example, a control lever 70 for the left hand and a control lever 80 for the right hand, shown in Fig. 2, as well as the rocker levers 71 and 81 provided therein for controlling *e.g.* the movement of the crane 20 as well as the closing and opening of the gripping members 31 of the grapple 30 at the crane head 24, by control functions set off by these controllers. During the control, the control commands formed by the control functions actuated by the control lever 70 for the left hand and the control lever 80 for the right hand, are transmitted from these controllers along communication buses 79 and 82 to a control unit 60 that actually takes care of controlling the actuators setting off various functions of the crane 20 and the grapple 30, by controlling the magnetic valves 91 to 94 of the hydraulic actuators 101 to 104 of the crane in a way required by the control functions actuated by the control levers 70 and 80.

The control unit 60 of the forwarder 10 shown in Fig. 1 comprises a memory 61 in which a target position Pₜ can be stored, to which the crane 20 should transfer the grapple 30 mounted on its head 24, or another implement possibly mounted on the crane head 24, from a random position. In such a method, the control unit 60 determines a travel path for the crane to the target position Pₜ from the position in which the grapple 30 is located when the instruction about the transfer to the target position is given. The control unit 60 will thus take into account the known obstacles in the range of movement of the crane 20, such as the bunks 13 limiting the load space 12 and the screen 25 normally provided in the front part of the load space. The crane head 24 can be steered to the target position Pₜ automatically by *e.g.* a separate control switch or by means of a control function for controlling another function, *e.g.* the control function for slewing the crane 20 towards the centre line L_{c} of the load space 12 by rotating the slewing table 14 about the rotation axis X_{c}. This can also be done by applying a control switch in the cabin 15 to select the target position Pₜ active or inactive. When the target position Pₜ is inactive, the crane 20 will also be moved within the load space 12 according to control functions actuated merely by the driver applying the controllers.

The target position Pₜ can be defined to be, for example, in the center of the load space 12 in its longitudinal direction, between two adjacent bunks 13 with respect to the bunks surrounding the load space 12. The target position is thus at a so-called centering point which is preferably in the centre of the load space 12 in the width direction as well. However, the target position can also be at any other selected point in the load space 12, seen in the radial direction of the crane 20. The desired target position Pₜ can be stored in the memory 61 of the control unit 60 by steering the crane head 24 to the desired position and storing this position as the target position Pₜ. There can also be several target positions Pₜ. For example, a target position between adjacent bunks 13 can be any position ensuring that the crane 20 and the grapple on its head will not collide with any of the bunks 13 when it is moved between the bunks 13. In the case of several target positions, the driver may be provided with a choice *(e.g.* by keys or buttons on a touch display) in the cabin 15, or the control unit 60 may be configured to steer the crane head 24 towards the target position Pₜ that is closest to the location where the grapple 30 is placed when the grapple 30 reaches the area from which the control unit 60 starts to move the grapple towards said target position Pₜ.

The transfer to the target position Pₜ can be configured to take place when the driver activates the transfer to the target position Pₜ. The activation can be done *e.g.* by applying a separate control switch or a button on a touch screen in the cabin,. Thus, the crane 20 is steered towards the target position Pₜ when the driver steers the crane 20 by turning the controller for moving it in the direction of the target position Pₜ, or by means of a control function controlling the slewing table to slew towards the centre line L_{c} of the load space 12 in relation to its rotation axis X_{c}. After the crane head 24 has reached the target position P_{t,} its motion is stopped even if the driver still held the controller turned in said direction. Thanks to such a function, the driver does not need to worry about stopping the control function at the right moment in order to stop the motion of the crane 20 reliably at the right moment, but the control unit 60 will stop the motion so that the crane head 24 and the grapple 30 mounted on it will stop at the target position Pt softly and without swaying. The function can be the same, irrespective of whether the crane head 24 and/or the grapple 30 mounted on it is moved between or over the bunks 13. When the control function (*e.g.* the turning of a control lever) is stopped, the crane head 24 being in the target position Pₜ, the automatic function will stop. Thus, with the next, new control function, the crane head 24 can be moved in the desired direction away from the target position Pₜ. This makes it possible, for example, to find a suitable location for the grapple 30 when a trunk is being loaded into the load space 12.

In the forwarder 10 shown in Fig. 1, measuring elements 51 to 54 shown in Fig. 2 are installed on the slewing table 14, in the joint between the slewing table 14 and the hoisting boom 21, in the joint between the hoisting boom 21 and the knuckle boom 22, and between the knuckle boom 22 and the extension boom 23. The measuring elements 51 to 53 which measure the position of the slewing table 14 (the angle of rotation with respect to a given initial position), the angle of the hoisting boom 21 and the knuckle boom 22 with respect to each other and the rotary table 14, can be *e.g.* suitable angle sensors known as such, and the measuring element 54 for measuring the movement of the extension boom can be *e.g.* a linear sensor known as such. In such an embodiment of the method according to the invention, the measuring elements 51 to 54 are connected to the control unit 60 in such a way that the control unit 60 receives measurement data produced by the measuring elements. By means of the measurement data, the control unit 60 determines the position of the slewing table 14, the hoisting boom 21, the knuckle boom 22, and the extension boom 23, and on the basis of these, the position of the crane head 24 and thereby also the grapple 30 with respect to a selected zero point, as well as corrects the travel path of the crane head 24 if the path of the grapple 30 deviates from the path determined by the control unit 60 for transferring the grapple 30 to the target point Pₜ.

With the measuring elements 51 to 54, the position, speed and acceleration of any point in the crane 20 or the grapple 30 therein can be determined with respect to a given zero point. A suitable zero point is, for example, the pivot of the slewing table in relation to the frame 11 of the forwarder (*i.e.* a point on the rotation axis X_{c}). The zero point can also be, in principle, any other point in the forwarder 10 that will remain stationary in relation to the frame 11. It is thus possible to determine the location of the head 24 of the crane 20 in relation to this zero point and thereby to control, by means of the control unit 60, the crane head 24 and the grapple 30 mounted on it to travel along a desired path by using so-called "tip control", wherein the control unit 60 continuously controls the movements of the actuators 101 to 104 of the crane in such a way that the crane head 24 would travel along the taught path as closely as possible. Thanks to the position of the crane head 24 determined by the measuring elements 51 to 54, the control unit 60 knows the position of the crane head 24 and the grapple 30 mounted on it with respect to the target position Pₜ and the known obstacles in the vicinity, and is thus capable, in all situations, of generating such a travel path, along which the transferred grapple 30 will not collide with the screen 25 in the front part of the load space 12, or with the bunks 13.

Control according to the method of the invention can be applied, for example, when the forwarder 10 has been driven next to a stack of trunks which have been previously felled and delimbed by a harvester, and trunks are to be loaded from the stack into the load space 12 of the forwarder 10. The grapple 30 is thus moved to a location above the stack by moving the hoisting boom 21, the knuckle boom 22 and the extension boom 23 of the crane 20, after which the grapple 30 is employed to grip the topmost trunk in the stack and to transfer it into the load space 12 of the forwarder 10. When entering the load space 12, the grapple 30 is normally lifted above the bunks 13, because the trunk can naturally not be transferred between the bunks 13 into the load space. This point can be *e.g.* a predetermined target position Pₜ, to which the control unit 60 steers the grapple 30 automatically. The target position Pₜ can be determined manually (by entering the coordinates of the target position in the control unit 60), by means of measuring elements 51 to 54 in the joints of the crane 20, or by calculations taking into account the measurements and the predicted positions of the grapple 30 mounted on the crane head 24. From the target position Pₜ above the bunks 13, the grapple 30 and the trunk therein are lowered to a suitable height and, if necessary, transferred to a location that is suitable with respect to the load space 12, from which the trunk can be dropped to the bottom of the load space 12 or onto trunks already placed there, by opening the gripping members 31 of the grapple 30.

If the grapple 30 is turned from the outside of the load space 12 to the load space 12 by slewing the crane 20 by means of the slewing table 14, the control unit 60 can control the rotary table 14 simultaneously when it moves the grapple 30 towards the target position Pₜ. From the target position, the crane 20 can be returned above the stack next to the forwarder 10 by merely pivoting the crane 20, because the target position Pₜ is typically selected so that the empty grapple 30 can be turned between two successive bunks (*e.g.* two middle bunks in the longitudinal direction of the load space) to the outside of the load space 12 without a risk of collision.

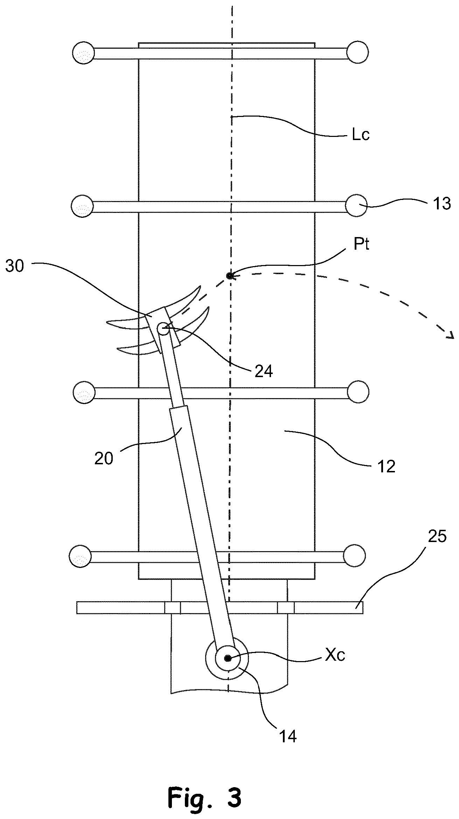

The travel path of the grapple 30 can extend, for example, between the two middlemost bunks 13 in the longitudinal direction of the load space 12, as shown in Fig. 3. After the grapple 30 has moved to the inside of the load space 12, it is automatically steered, by applying the control according to the method of the invention, to the target position Pₜ inside the load space 12. If the target position has been selected in the front part of the load space, or if the grapple 30 is initially in the rear part of the load space, the grapple 30 is moved in the longitudinal direction of the load space towards the screen 25 in the front part of the load space 12.

It is also possible to transfer the grapple 30 to the target position Pₜ for example in such a way that upon loading of trunks, the crane head 24 with the grapple 30 is automatically moved to the target position Pₜ when the crane 20 is slewed merely by rotating the slewing table with respect to the vertical rotation axis X_{c}, from the outside of the load space 12 to a location above it. Thus, if a trunk to be loaded is incorrectly aligned with respect to the load space 12 (in the longitudinal direction of the load space), the driver can move the crane 20 manually by steering the grapple 30 before lowering the trunk into the load space 12. After dropping the trunk and opening the grapple 30, the control system 60 can be programmed to operate so that it will not move the crane 20 in the side direction until it has returned the grapple 30 to the target position Pₜ first. From this position, the grapple 30 can then be transferred, by a simple turning movement of the slewing table 14, to the outside of the load space 12 again, because the target position Pₜ has been selected so that the grapple 30 will not collide with the bunks 13 of the load space 12 even if the grapple 30 were at such a height that it would move between the bunks 13 to the outside of the load space 12.

If the selected travel path is such that the grapple 30 will pass between the two middlemost bunks 13, the control unit 60 may also be configured to control the crane 20 in such a way that the crane head 24 will, upon turning in the side direction, be steered to the target position Pₜ before it reaches the successive bunks 13 on the sides of the load space 12. This can also take place if the crane head 24, the grapple 30 and the trunk possibly carried by it are above the bunks 13.

Moreover, the transfer of the grapple to the target position can be implemented in such a way that the control unit 60 will take into account the rate, selected by the position of the rocking lever 81, so that it will adjust the lengths of the control functions corresponding to the movements of the different actuators 101 to 104 to be directly proportional to the selected speed, depending on the tilting of the rocking lever. If the speed range is, for example 30 to 100% of the full speed, the control functions automatically generated by the control unit 60 have, for example at 30%, a duration of t_{30%} = (1/0.3) * t_{100%}, that is, 3.3 times longer than when driving at full speed. Thus, the velocities of the actuators 101 to 104 naturally have to be adjusted correspondingly so that if the velocity of the actuator at full speed is v_{100%}, then at the 30% speed it will be v_{30%} = 0,3*v_{100%} so that the head of the crane 20 would move along the same travel path as when driving at full speed.

When trunks are transferred from the load space 12 to a stack to be formed by the side of the forwarder 10, the crane is first steered to a location above the bunks 13 and then over the bunks 13 to the outside of the load space 12. Even in this case, the crane head can be configured to move first to a target position Pt and then over the bunks 13 to the outside of the load space 12. When the empty grapple 30 is transferred from the vicinity of the stack of trunks outside of the load space 12 back into the load space 12, the control unit 60 can control the crane head 24 to move in such a way that the grapple 30 is automatically transferred to the target position Pₜ when it comes inside the load space 12. Thus, the control of the crane 20 can also be configured in such a way that the crane head 24 is automatically steered, already during the slewing movement of the crane, in such a way with respect to the bunks 13 around the load space 12 that it will not collide with them even though the transfer back to the load space is performed merely by pivoting the crane 20 by means of the slewing table 24.

Further, also in this case, the velocity of the crane 20 can be adjusted by changing the position of the rocker lever 81, wherein the durations of the control functions and the velocities of the actuators 101 to 104 are scaled in a similar way as when moving the grapple 30 from the inside to the outside of the load space 12.

Above, the transfer of the grapple 30 from the load space 12 to the outside, as well as the transfer of the grapple 30 from the outside to the inside of the load space 12 have been described. In both cases, it is possible to take into account the height of the load in the load space 12, for example in such a way that in the target position Pₜ, the height at which the grapple 30 is stopped is automatically stored/can be stored manually, if desired, in the memory 61 of the control unit 60. After this, the next time when the grapple 30 is brought into the target position Pₜ, the control unit 60 will control the crane so that the grapple 30 will not move lower than this previous position but will stop at the height of at least this preceding level. From this position, the grapple 30 can be lowered *e.g.* manually (if trunks are being unloaded from the load space), or it can be left further up (if trunks are being loaded into the load space). By this function, the position of the crane head 24 with the grapple 30 is brought to the right level in the height direction, the height of the load being changed as trunks are loaded into or unloaded from the load space 12.

The method and the system according to the invention can be implemented in a variety of ways different from the above-presented example embodiments, or in addition to the functions presented therein, the method and the system may involve a variety of features which facilitate the use of the crane further. In some embodiments, the method can be implemented *e.g.* in such a way that it comprises a step in which the control unit or a corresponding part of the control system of the forwarder takes into account the vertical position of the crane when calculating an optimal path in relation to time when moving the crane and the grapple (as well as a trunk possibly carried by it), or another implement mounted on it, out of the load space or from the outside of the load space back into the load space. The method can also comprise *e.g.* a step, for finding several target positions between bunks, of bringing the grapple successively in contact with a radial inner bunk (*i.e.* a bunk on the side of the crane in relation to the crane head) and a radial outer bunk (*i.e.* a bunk left outside the crane head), and having the control unit calculate at least one position without contact.

In such an embodiment in which the grapple may have various turning positions in relation to the crane and has various dimensions in relation to the rotation axis of the slewing table, the grapple can, when it is moved via a space between adjacent bunks, swivelled to a position in which its distance to the bunk is at its greatest, before the grapple is moved between the bunks. In an embodiment of *e.g.* this type or another type, the method can also comprise a step in which the grapple is moved by default to a location where the greater dimension of the grapple is in a direction transverse to the plane between the bunks to be passed. This will ensure that when the crane head is moved so that the grapple is moved from the outside to the inside of the load space, or *vice versa,* between the bunks, there is always sufficient space for the grapple between the bunks, even if it had, in another position, a risk of hitting the bunks in this location.

Further, in an embodiment, the method can also comprise a step in which the control unit controls the crane to move according to at least one optimization program, taking into account the velocity, the power required, and/or loading data.

The method and the system according to the invention are thus not limited to the example embodiments presented above, but they can be implemented in a variety of ways within the scope of the appended claims.

## Claims

1. A method for controlling the crane (20) of a forwarder (10), wherein
- the crane (20) can be slewed around a rotation axis (X_{c}),
- the forwarder (10) comprises a load space (12) that is open at the top,
- the crane (20) supports a tool (30) suspended in the area of its head (24),
- the tool (30) and the crane (20) can be moved to travel substantially in the horizontal direction above the load space (12),
- the movement of the crane (20) is controlled by a control unit (60),
- at least one target position (Pₜ) is defined in the radial direction of the crane (20),
- the target position (Pₜ) is stored in a memory (61) of the control unit (60),
- the control unit (60) controls the crane (20) to move the tool (30) towards the target position (Pₜ) on the basis of a signal received in the control unit (60), **characterized in that**
- the transfer to the target position (Pₜ) is activated by means of a separate control switch, a button on a touch screen in the cabin (15) of the forwarder (10),
- the crane head (24) is guided towards the target position (Pₜ) when the crane (20) is steered by turning the controller moving it in the direction of the target position (Pₜ), or by means of a control function controlling the slewing table to slew towards the centre line (L_{c}) of the load space (12) in relation to its rotation axis (X_{c}),
- after the crane head (24) has reached the target position (Pt), its movement stops. even if the driver still held the controller turned in said direction.

2. The method according to claim 1, wherein the load space (12) is limited at one end by a wall (25), **characterized in that** the method also comprises a step in which the tool (30) is moved towards the wall (25) when the crane (20) enters the space above the load space (12).

3. The method according to claim 1 or 2, wherein the load space is limited by bunks (13) spaced from each other in the lateral direction, **characterized in that**
the method further comprises a step in which the target position (Pₜ) is defined to be:
- in the centre of the load space (12), seen in the radial direction of the crane (20), or
- between adjacent bunks (13), or
- at any selected point in the load space (12), seen in the radial direction of the crane (20).

4. The method according to any of the claims 1 to 3, **characterized in that** the method further comprises a step in which the controller can be used to store several target positions (Pₜ) in the memory (61) and to select them.

5. The method according to any of the claims 1 to 3, wherein the crane (20) is slewed by means of a slewing device (14), **characterized in that** the method further comprises a step in which the movement of the slewing device (14) is controlled when the tool (30) is being moved between adjacent bunks (13) towards the target position (Pₜ).

6. The method according to claim 5, **characterized in that** the target position (Pₜ) ensuring that the crane (20) with the tool (30) will not collide with any of the bunks (13) when it is moved through the space between the adjacent bunks (13).

7. The method according to claim 1 or 3, **characterized in that** the method further comprises a step in which the target position (Pₜ) is determined manually, by means of sensors (51 to 54) or by calculating the dimensions and the predicted positions of the crane and the tool.

8. The method according to any of the preceding claims, wherein the crane (20) is movable in the vertical direction, **characterized in that** the method further comprises a step in which the control unit (60) takes into account the vertical position of the crane (20) upon calculating the optimal path in relation to time when moving the crane (20) and the tool (30) out of the load space (12).

9. The method according to any of the preceding claims, **characterized in that** the method further comprises a step, for finding several target positions (Pₜ) between the bunks (13), of bringing the tool (30) successively in contact with a radial inner bunk and a radial outer bunk, and having the control unit (60) calculate at least one position without contact.

10. The method according to any of the preceding claims, **characterized in that** the method further comprises a step in which the control unit (60) controls the crane (20) to move according to at least one optimization program, taking into account the velocity, the power required, and/or loading data.

11. A system for controlling the crane (20) of a forwarder (10), which system can be installed in a forwarder (10) having a load space (12), and which system is configured to control the crane (20) of the forwarder (10) by means of control functions to be actuated with controllers (70, 71, 80, 81) in the forwarder (10), **characterized in that** the system comprises a control unit (60), to which the controllers (70, 71, 80, 81) can be connected for controlling the crane (20) according to a method according to any of the claims 1 to 10.

12. The system according to claim 11, **characterized in that** the system also comprises measuring devices (51 to 54) connected to the control unit (60) and provided in the crane (20) or the actuators (101 to 104) for moving the same, configured to measure the movements of the different booms (21 to 23) of the crane (20) and/or the actuators (101 to 104) for moving the same.

## Patentansprüche

1. Verfahren zur Steuerung des Krans (20) einer Forstmaschine (10), wobei
- der Kran (20) um eine Drehachse (X_{c}) geschwenkt werden kann,
- die Forstmaschine (10) einen Laderaum (12) umfasst, der an der Oberseite offen ist,
- der Kran (20) ein Werkzeug (30) trägt, das im Bereich seines Kopfes (24) aufgehängt ist,
- das Werkzeug (30) und der Kran (20) bewegt werden können, um im Wesentlichen in horizontaler Richtung über dem Laderaum (12) zu fahren,
- die Bewegung des Krans (20) durch eine Steuereinheit (60) gesteuert wird,
- zumindest eine Zielposition (Pₜ) in der radialen Richtung des Krans (20) definiert ist,
- die Zielposition (Pₜ) in einem Speicher (61) der Steuereinheit (60) gespeichert ist,
- die Steuereinheit (60) den Kran (20) steuert, um das Werkzeug (30) auf Grundlage eines in der Steuereinheit (60) empfangenen Signals in Richtung der Zielposition (Pₜ) zu bewegen, **dadurch gekennzeichnet, dass**
- der Übergang zur Zielposition (Pₜ) mittels eines separaten Steuerschalters, einer Schaltfläche auf einem Touchscreen in der Kabine (15) der Forstmaschine (10), aktiviert wird,
- der Krankopf (24) in Richtung der Zielposition (Pₜ) geführt wird, wenn der Kran (20) durch Drehen der Steuerung, sie in die Richtung der Zielposition (Pₜ) bewegend, oder mittels einer Steuerfunktion, die den Schwenktisch steuert, um ihn in Richtung der Mittellinie (L_{c}) des Laderaum (12) in Beziehung zu seiner Drehachse (X_{c}) zu schwenken, gelenkt wird,
- nachdem der Krankopf (24) die Zielposition (Pₜ) erreicht hat, seine Bewegung stoppt, selbst wenn der Fahrer die Steuerung weiterhin in die Richtung hält.

2. Verfahren nach Anspruch 1, wobei der Laderaum (12) an einem Ende durch eine Wand (25) begrenzt ist, **dadurch gekennzeichnet, dass** das Verfahren auch einen Schritt umfasst, in dem das Werkzeug (30) in Richtung der Wand (25) bewegt wird, wenn der Kran (20) in den Raum über dem Laderaum (12) eintritt.

3. Verfahren nach Anspruch 1 oder 2, wobei der Laderaum durch Rungen (13) begrenzt ist, die voneinander in der lateralen Richtung beabstandet sind, **dadurch gekennzeichnet, dass**
das Verfahren ferner einen Schritt umfasst, bei dem definiert wird, dass sich die Zielposition (Pₜ) befindet:
- in der Mitte des Laderaums (12), gesehen in der radialen Richtung des Krans (20), oder
- zwischen benachbarten Rungen (13), oder
- an einem beliebigen ausgewählten Punkt im Laderaum (12), gesehen in der radialen Richtung des Krans (20).

4. Verfahren nach einem der Ansprüche 1 bis 3, **dadurch gekennzeichnet, dass** das Verfahren ferner einen Schritt umfasst, bei dem die Steuerung verwendet werden kann, um verschiedene Zielpositionen (Pₜ) im Speicher (61) zu speichern und sie auszuwählen.

5. Verfahren nach einem der Ansprüche 1 bis 3, wobei der Kran (20) mittels einer Schwenkvorrichtung (14) geschwenkt wird, **dadurch gekennzeichnet, dass** das Verfahren ferner einen Schritt umfasst, bei dem die Bewegung der Schwenkvorrichtung (14) gesteuert wird, wenn das Werkzeug (30) zwischen benachbarten Rungen (13) in Richtung der Zielposition (Pₜ) bewegt wird.

6. Verfahren nach Anspruch 5, **dadurch gekennzeichnet, dass** die Zielposition (Pₜ) sicherstellt, dass der Kran (20) mit dem Werkzeug (30) nicht mit einer der Rungen (13) kollidiert, wenn es durch den Raum zwischen benachbarten Rungen (13) bewegt wird.

7. Verfahren nach Anspruch 1 oder 3, **dadurch gekennzeichnet, dass** das Verfahren ferner einen Schritt umfasst, in dem die Zielposition (Pₜ) manuell bestimmt wird, mittels Sensoren (51 bis 54) oder durch Berechnen der Abmessungen und der vorhergesagten Positionen des Krans und des Werkzeugs.

8. Verfahren nach einem der vorhergehenden Ansprüche, wobei der Kran (20) in der vertikalen Richtung bewegbar ist, **dadurch gekennzeichnet, dass** das Verfahren ferner einen Schritt umfasst, bei dem die Steuereinheit (60) die vertikale Position des Krans (20) beim Berechnen des optimalen Pfades bezüglich der Zeit beim Bewegen des Krans (20) und des Werkzeugs (30) aus dem Laderaum (12) heraus berücksichtigt.

9. Verfahren nach einem der vorhergehenden Ansprüche, **dadurch gekennzeichnet, dass** das Verfahren ferner einen Schritt, zum Auffinden mehrerer Zielpositionen (Pₜ) zwischen den Rungen (13), umfasst, das Werkzeug (30) nacheinander mit einer radialen inneren Runge und einer radialen äußeren Runge in Kontakt zu bringen, wobei die Steuereinheit (60) zumindest eine Position ohne Kontakt berechnet.

10. Verfahren nach einem der vorhergehenden Ansprüche, **dadurch gekennzeichnet, dass** das Verfahren ferner einen Schritt umfasst, bei dem die Steuereinheit (60) den Kran (20) steuert, um sich gemäß zumindest einem Optimierungsprogramm zu bewegen, die Geschwindigkeit, die erforderliche Leistung und/oder Ladedaten berücksichtigend.

11. System zur Steuerung des Krans (20) einer Forstmaschine (10), wobei das System in einer Forstmaschine (10) mit einem Laderaum (12) installiert werden kann und wobei das System ausgelegt ist zum Steuern des Krans (20) der Forstmaschine (10) mittels Steuerfunktionen, um mit Steuerungen (70, 71, 80, 81) in der Forstmaschine (10) betätigt zu werden, **dadurch gekennzeichnet, dass** das System eine Steuereinheit (60) umfasst, mit der die Steuerungen (70, 71, 80, 81) zum Steuern des Krans (20) verbunden werden können , gemäß einem Verfahren nach einem der Ansprüche 1 bis 10.

12. System nach Anspruch 11, **dadurch gekennzeichnet, dass** das System auch Messvorrichtungen (51 bis 54) umfasst, die mit der Steuereinheit (60) verbunden und im Kran (20) oder den Aktuatoren (101 bis 104) zum Bewegen desselben bereitgestellt sind, ausgelegt zum Messen der Bewegungen der unterschiedlichen Ausleger (21 bis 23) des Krans (20) und/oder der Aktuatoren (101 bis 104) zum Bewegen derselben.

## Revendications

1. Procédé de commande d'une grue (20) d'un porteur (10),
- la grue (20) étant capable de pivoter autour d'un axe de rotation (X_{c}),
- le porteur (10) comprenant un espace de chargement (12) qui est ouvert en haut,
- la grue (20) portant un outil (30) suspendu dans la région de sa tête (24),
- l'outil (30) et la grue (20) pouvant être mis en mouvement pour se déplacer sensiblement dans la direction horizontale au-dessus de l'espace de chargement (12),
- le mouvement de la grue (20) étant commandé par une unité de commande (60),
- au moins une position cible (Pₜ) étant définie dans la direction radiale de la grue (20),
- la position cible (Pₜ) étant enregistrée dans une mémoire (61) de l'unité de commande (60),
- l'unité de commande (60) commandant la grue (20) afin de déplacer l'outil (30) vers la position cible (Pₜ) sur la base d'un signal reçu dans l'unité de commande (60),
**caractérisé en ce que**
- le transfert jusqu'à la position cible (Pₜ) est activé au moyen d'un interrupteur de commande distinct, un bouton sur un écran tactile dans la cabine (15) du porteur (10),
- la tête (24) de la grue est guidée vers la position cible (Pₜ) lorsque la grue (20) est dirigée en tournant l'organe de commande pour le placer dans la direction de la position cible (Pₜ) ou au moyen d'une fonction de commande commandant à la table de pivotement de pivoter vers la ligne centrale (L_{c}) de l'espace de chargement (12) par rapport à son axe de rotation (X_{c}),
- la tête (24) de la grue étant parvenue à la position cible (Pₜ), son mouvement s'interrompt même si le conducteur continuait de maintenir l'organe de commande tourné dans ladite direction.

2. Procédé selon la revendication 1, dans lequel l'espace de chargement (12) est limité à une extrémité par une paroi (25), le procédé étant **caractérisé en ce qu'**il comprend également une étape à laquelle l'outil (30) est déplacé vers la paroi (25) lorsque la grue (20) pénètre dans l'espace au-dessus de l'espace de chargement (12).

3. Procédé selon la revendication 1 ou 2, dans lequel l'espace de chargement est limité par des traverses (13) espacées entre elles dans la direction latérale, le procédé étant **caractérisé en ce que**
il comprend en outre une étape à laquelle la position cible (Pₜ) est définie :
- au centre de l'espace de chargement (12), vu dans la direction radiale de la grue (20), ou
- entre des traverses adjacentes (13), ou
- en un point sélectionné quelconque dans l'espace de chargement (12), vu dans la direction radiale de la grue (20).

4. Procédé selon l'une quelconque des revendications 1 à 3, le procédé étant **caractérisé en ce qu'**il comprend en outre une étape à laquelle l'organe de commande est utilisable pour enregistrer plusieurs positions cibles (Pₜ) dans la mémoire (61) et pour les sélectionner.

5. Procédé selon l'une quelconque des revendications 1 à 3, dans lequel la grue (20) pivote au moyen d'un dispositif de pivotement (14), le procédé étant **caractérisé en ce qu'**il comprend en outre une étape à laquelle le mouvement du dispositif de pivotement (14) est commandé lorsque l'outil (30) est déplacé entre des traverses adjacentes (13) vers la position cible (Pₜ).

6. Procédé selon la revendication 5, **caractérisé en ce que** la position cible (Pₜ) garantit que la grue (20) avec l'outil (30) n'entrera pas en collision avec l'une quelconque des traverses (13) lorsqu'elle parcourt l'espace entre les traverses (13) adjacentes.

7. Procédé selon la revendication 1 ou 3, le procédé étant **caractérisé en ce qu'**il comprend en outre une étape à laquelle la position cible (Pₜ) est déterminée manuellement, au moyen de capteurs (51 à 54) ou par calcul des dimensions et des positions prédites de la grue et de l'outil.

8. Procédé selon l'une quelconque des revendications précédentes, dans lequel la grue (20) est mobile dans la direction verticale, le procédé étant **caractérisé en ce qu'**il comprend en outre une étape à laquelle l'unité de commande (60) tient compte de la position verticale de la grue (20) dans le calcul de la trajectoire optimale en fonction du temps lors du mouvement de la grue (20) et de l'outil (30) hors de l'espace de chargement (12).

9. Procédé selon l'une quelconque des revendications précédentes, le procédé étant **caractérisé en ce qu'**il comprend en outre, pour l'identification de plusieurs positions cibles (Pₜ) entre les traverses (13), une étape d'amenée de l'outil (30) au contact successivement d'une traverse radiale intérieure et d'une traverse radiale extérieure, et de calcul, par l'unité de commande (60), d'au moins une position sans contact.

10. Procédé selon l'une quelconque des revendications précédentes, le procédé étant **caractérisé en ce qu'**il comprend en outre une étape à laquelle l'unité de commande (60) commande le mouvement de la grue (20) selon au moins un programme d'optimisation compte tenu de la vitesse, de la puissance requise et/ou de données de chargement.

11. Système de commande de la grue (20) d'un porteur (10), lequel système est susceptible d'être installé dans un porteur (10) doté d'un espace de chargement (12), et lequel système est configuré pour commander la grue (20) du porteur (10) au moyen de fonctions de commande destinées à être activées à l'aide d'organes de commande (70, 71, 80, 81) dans le porteur (10), le système étant **caractérisé en ce qu'**il comprend une unité de commande (60), à laquelle les organes de commande (70, 71, 80, 81) sont susceptibles d'être reliés , destinée à commander la grue (20) selon un procédé selon l'une quelconque des revendications 1 à 10.

12. Système selon la revendication 11, le système étant **caractérisé en ce qu'**il comprend également des dispositifs de mesure (51 à 54) reliés à l'unité de commande (60) et placés dans la grue (20) ou les actionneurs (101 à 104) destinés à la déplacer, configurés pour mesurer les mouvements des différentes flèches (21 à 23) de la grue (20) et/ou des actionneurs (101 à 104) destinés à la déplacer.
